# EUROPEAN PATENT SPECIFICATION

(11) **EP 3 235 711 B1**
(45) Date of publication and mention of the grant of the patent: **28.08.2019**
(21) Application number: 15820874.4
(22) Date of filing: 03.12.2015
(51) Int. Cl.: B62K 25/28

(54) **A SUSPENSION SYSTEM FOR VEHICLES WITH AT LEAST TWO WHEELS**
AUFHÄNGUNGSSYSTEM FÜR FAHRZEUGE MIT MINDESTENS ZWEI RÄDERN
SYSTÈME DE SUSPENSION POUR VÉHICULES POURVUS D'AU MOINS DEUX ROUES

(30) Priority: 16.12.2014 ES 201431847
(43) Date of publication of application: 25.10.2017
(73) Proprietor: Pisà Canyelles, Roger, 07320 Santa Maria del Cami (ES)
(72) Inventor: Pisà Canyelles, Roger, 07320 Santa Maria del Cami (ES)
(74) Representative: Sugrañes Patentes y Marcas
(86) International application number: PCT/ES2015/070875
(87) International publication number: WO 2016/097433

(56) References cited:
- EP-A1- 2 535 252
- EP-A1- 2 706 002
- DE-A1- 19 745 380
- GB-A- 2 482 160
- US-A- 5 860 665
- US-A1- 2004 256 834
- US-A1- 2006 225 942
- US-A1- 2009 001 686
- US-A1- 2014 001 729

## Description

### Technical field of the invention

The invention relates to a suspension system for vehicles with at least two wheels, such as a bicycle, of the type comprising a rigid structure adapted to support the axle of a rear wheel of the vehicle and a damping device, said rigid structure being connected to the chassis of the vehicle by means of corresponding upper and lower mechanisms providing movement, in a guided way and under the influence of the damping device, from the rigid structure with regard to the chassis.

### Background of the invention

Suspension systems applicable to two-wheel vehicles, such as mountain bicycles, have evolved significantly. Therefore, while they initially had the sole purpose of minimizing the effect of bumpy terrain on a cyclist, the most advanced systems seek to achieve an optimal compromise between the effectiveness of maximum traction and a minimum loss of power with a good damping capacity.

In suspension systems where a rigid structure supporting the axle of a rear wheel is connected to the vehicle chassis, with the ability to move on the chassis plane, this movement being subject to the influence of a damping device, there is an undesired effect produced by the increase of the chain length. This increase can occur when the position of the rear axle changes in such a way that the distance increases between it and the output axle of the driving mechanism of the vehicle - the bottom bracket in the case of a bicycle. This phenomenon, called pedal kickback, results, in the case of a bicycle, in the cranks rotating in the direction opposite to the driving direction of the bicycle.

The patent document US 6712374 describes this phenomenon and proposes a suspension system suitable to reduce its impact on the cyclist. However, the described system has certain drawbacks. For example, the system greatly interferes with braking, which is called brake-squat, with values near or over 100%.

Furthermore, the system described offers a backwards progression curve from a certain point in the travel path of the rear axle, i.e. the damping effect may drop just when it is most needed, for example, when a larger obstacle is encountered.

In the system described in the patent document US 6712374, the rigid structure of the rear wheel axle is connected to the chassis of the bicycle by means of a moveable lower support. Specifically, the structure is articulated to a rotating lower connecting rod mounted on the chassis.

There are proposals that, in order to solve the drawback of the pedal kickback and the backwards progression curve associated with the system according to US 6712374, suggest using a lower connecting rod of shorter length and guiding the travel of the articulated structure on a higher point, so said lower connecting rod changes its rotation direction during the travel path of the rear axle. While this creates a non-backwards progression curve, it becomes too linear. On the other hand, it would be desirable to further mitigate the pedal kickback effect, especially in the first half of the travel path/range of the rear axle. An example of such proposals is described in patent document US20090261556.

One of the aims of the invention is a suspension system that makes it possible to solve at the same time the drawbacks mentioned above, specifically to eliminate or mitigate the pedal kickback during most of the path of the rear rotation axle and to improve the ratio between braking and shock absorption.

It is also a secondary aim of the invention to achieve a system which enables a great variety of implementation possibilities, to choose one that provides the system with an ideal progression curve based on the profile of the user from whom the vehicle is intended, without sacrificing the main aims of the invention. For example, it is desirable that by modifying the geometry of the system, it can show advantageous progression curves both with the use of spring dampers and pneumatic dampers, while still eliminating or mitigating the pedal kickback during most of the path of the rear rotation axle, and improving the ratio between braking and shock absorption with respect to the currently known systems.

The patent document US 2014001729 discloses a suspension system according to the preamble of the claim 1.

### Description of the invention

The suspension system of the invention is of the sort that comprises a rigid structure supporting the axle of a rear wheel of a vehicle and a damping device, said rigid structure comprising a lower arm and an upper arm forming an angle, both connected to corresponding upper and lower points of a chassis of the vehicle through their corresponding upper and lower mechanisms that provide movement, in a guided way and under the influence of the damping device, of the rigid structure with regard to the chassis, of which the lower mechanism comprises a lower connecting rod whose articulated joints with the lower arm of the structure and the chassis are at least 20 mm apart from one another, the articulated joint with said arm of the structure being arranged, in the forward direction of the vehicle, ahead of or matching the vertical plane passing through the output axle of a driving mechanism of the vehicle - the bottom bracket in the case of a bicycle; the upper mechanism includes an upper connecting rod with articulated joints with the upper arm of the structure and the chassis, wherein the articulated joint with the chassis is arranged, in the forward direction of the vehicle, ahead of or matching the vertical plane passing through the articulated joint of the lower connecting rod with the chassis.

In this suspension system, at least one of the upper or lower connecting rods is part of a lever whose fulcrum is the articulated joint of the connecting rod with the chassis, and whose resistance is an articulated joint with one of the ends of the damping device, with the arrangement and orientation of the upper and lower connecting rods being such that the instant rotation center *(IRC)* of the rigid structure is always ahead of the articulated joint of the lower connecting rod with the chassis during the whole travel stroke of the axle.

The instant rotation center *(IRC)* is the virtual rotation point of a system, in this case of the rigid structure supporting the axle of the rear wheel. While it matches the main rotation point in a single-pivot system, in this case it is an imaginary point that changes its position based on the instant position of the rear wheel axle.

In a system like the one in this invention, the *IRC* shall be arranged at the intersection of the straight line passing through the articulated joints of the lower connecting rod with the lower arm of the structure and the chassis, and the straight line passing through the articulated joints of the upper connecting rod with the upper arm of the structure and the chassis.

The selection of a lower connecting rod whose articulated joints with the arm of the structure and the chassis are at least 20 mm apart from one another efficiently helps not only to achieve the aims of the invention; they also provide the system with the capacity to have pedaling efficiency values of over 100% (100% anti-squat). Advantageously, this means that a high sag can be obtained, so the rear wheel will not lift off the ground, meaning higher traction and grip.

In the context of the current invention, sag means the range of the damping device once the rider or biker is on the vehicle.

Furthermore, the abovementioned selection, along with the other conditions imposed by Claim 1 of the invention, make it possible to reduce the pedal kickback during at least 70% of the path of the rear wheel axle.

According to the invention, the lower connecting rod is used as the support of a sprocket or pulley that, acting as a loose pulley, is intended to support and offset a transmission chain or belt.

Advantageously, the pedal kickback effect is reduced, since the increase of tension and therefore the stretching of the transmission chain is necessarily absorbed by the section of the chain between this sprocket or pulley and the rear axle. Specifically, these variants make it possible to reduce the pedal kickback during the whole range of the axle.

It is also of interest to select the geometry in such a way that during the whole travel stroke of the axle, the articulated joint of the lower connecting rod with the rigid structure stays ahead of or matching the vertical plane passing through its articulated joint with the chassis.

Preferably, the articulated joint of the lower connecting rod with the chassis is arranged at a distance less than or equal to 200 mm of the output axle of the driving mechanism.

The invention takes into consideration embodiments where both the upper and lower connecting rods rotate in opposite directions, the upper connecting rod rotating in the same direction as the wheels in the forward direction of the vehicle during the whole travel stroke of the axle in the compression direction of the damping device; or alternatively where both the upper and lower connecting rods rotate in the same direction, opposite to the rotation direction of the wheels in the forward direction of the vehicle, during the whole travel stroke of the axle in the compression direction of the damping device.

In the first case, the *IRC* can follow a backwards path during the whole travel stroke of the axle in the direction of compression of the damping device; in the second case, the *IRC* can follow an ascending path during the whole travel stroke of the axle in the direction of compression of the damping device.

The invention also takes into consideration, besides these two cases, a single connecting rod, or two connecting rods connecting the rigid structure with the chassis, forming part of a lever, so only one end of the damping device or both ends are moveable.

### Brief description of the drawings

Figures 1a and 1b schematically depict a first embodiment of a suspension system, suitable when the damping device is a spring damper, in its extended and compressed positions respectively, indicating the arrangement of the Instant Rotation Center (*IRC*);
Figures 2a and 2b depict a second embodiment of a suspension system, also suitable when the damping device is a spring damper, in its extended and compressed positions respectively, which comprises a sprocket acting as a loose pulley, used to offset the chain, arranged on the upper connecting rod said second embodiment is not an embodiment of a suspension system according to the present invention;
Figures 3a and 3b depict a third embodiment of a suspension system, also suitable when the damping device is a spring damper, in its extended and compressed positions respectively;
Figures 4a and 4b depict a fourth embodiment of a suspension system, also suitable when the damping device is a spring damper, in its extended and compressed positions respectively;
Figures 5a and 5b depict a fifth embodiment of a suspension system, also suitable when the damping device is a spring damper, in its extended and compressed positions respectively;
Figures 6a and 6b depict a sixth embodiment of a suspension system, also suitable when the damping device is a spring damper, in its extended and compressed positions respectively;
Figures 7a and 7b depict a seventh embodiment of a suspension system, also suitable when the damping device is a spring damper, in its extended and compressed positions respectively;
Figures 8a and 8b depict an eighth embodiment of a suspension system, also suitable when the damping device is a spring damper, in its extended and compressed positions respectively;
Figures 9a and 9b depict a ninth embodiment in this case of a suspension system according to the invention, also suitable when the damping device is a pneumatic damper, in its extended and compressed positions respectively, that encompasses a sprocket acting as a loose pulley, used to offset the chain, located on the lower connecting rod; said ninth embodiment being an embodiment of a suspension device according to the present invention;
Figures 10a and 10b depict a tenth embodiment of a suspension system, also suitable when the damping device is a pneumatic damper, in its extended and compressed positions respectively;
Figures 11a and 11b depict an eleventh embodiment of a suspension system, also suitable when the damping device is a pneumatic damper, in its extended and compressed positions respectively;
Figures 12a and 12b depict a twelfth embodiment of a suspension system, also suitable when the damping device is a pneumatic damper, in its extended and compressed positions respectively;
Figures 13a and 13b depict a thirteenth embodiment of a suspension system, also suitable when the damping device is a pneumatic damper, in its extended and compressed positions respectively;
Figures 14a and 14b depict a fourteenth embodiment of a suspension system, also suitable when the damping device is a pneumatic damper, in its extended and compressed positions respectively;
Figures 15a and 15b depict the anti-squat response of the embodiments according to figures 2 and 9, as well as other embodiments based on those depicted by figures 2 and 9, and for systems representing the state of the art;
Figure 16 depicts the interference of braking with suspension (the brake-squat effect) for the embodiments indicated in figures 2 and 9, as well as an embodiment based on that shown in figure 2 and also for two systems representing the state of the art;
Figure 17 depicts the Pedal Kickback effect for the embodiment shown in figure 2, as well as for other embodiments based on those shown in figures 2 and 9, and also for two systems representing the state of the art;
Figure 18 depicts the progression of the suspension system for the embodiments shown in figures 2 and 9 of the invention, for an embodiment based on that shown in figure 2, as well as two systems representing the state of the art.

### Detailed description of the invention

The embodiments of the suspension system 1 described below have in common that they encompass a rigid structure 2 with two angled arms 2a and 2b with their connecting apex supporting axle 30 of the rear wheel of the vehicle.

The figures are schematic, and each arm 2a and 2b can have a rear shape as a fork, to arrange each branch at one side of the rear wheel, or in a simple shape arranging it only at one side of the rear wheel.

Also, each arm 2a and 2b can also have a front shape as a fork too, to arrange each branch at one side of the chassis 3 of the vehicle if required to avoid mechanical interferences with it, or a simple shape when there are no interferences with the chassis 3 of the vehicle or arranged at one side of the chassis 3.

In the examples the vehicle is a bicycle, although in some figures only the essential components of system 1 are shown to understand the invention.

In all the cases, the front ends of lower and upper arms 2a and 2b, respectively, of the rigid structure 2 are connected to chassis 3 of the bicycle through the corresponding lower and upper mechanisms 5a and 5b that condition the movement of the rigid structure 2 and therefore, of the axle 30 of the rear wheel, when it is required by an obstacle.

The suspension system 1 is also equipped with a damping device 6, illustrated as a spring or pneumatic damper. This shock absorber 6 can be a metal spring or pneumatic damper. According to the embodiment adopted, one or other option shall be the best. The function of the damping device 6 is to damp/reduce the effect of jerking of the rear wheel axle 30.

Of the aforementioned lower mechanism 5a and upper mechanism 5b, lower mechanism 5a includes a lower connecting rod 7 with articulated joints 7a, 7b with lower arm 2a of the rigid structure 2 and with the chassis 3, respectively, at least 20 mm apart from one another. Articulated joint 7a is arranged in the forward direction of the vehicle, matching or ahead of the vertical plane passing through the output axle 11 of the driving mechanism of the vehicle, in this case the bottom bracket of a bicycle.

Upper mechanism 5b includes an upper connecting rod 8 with articulated joints 8a, 8b with the upper arm 2b of the rigid structure 2 and the chassis 3, respectively, with the articulated joint 8b arranged in the forward direction of the bicycle ahead of or matching the vertical plane passing through articulated joint 7b of the lower connecting rod 7 with the chassis 3.

The same numerical references have been used in the drawings to designate the same characteristics and/or equivalent components.

For all the embodiments illustrated, whether the upper connecting rod 8 or lower connecting rod 7, or both upper and lower connecting rods, they are part of a lever whose fulcrum is the articulated joint of connecting rod 7 and/or connecting rod 8 with the chassis 3 and whose resistance is an articulated joint with one of the ends 6a or 6b of the damping device 6. These different embodiments create systems 1 where one or both ends of the damping device 6 can be moveable, as explained below.

In any case, the arrangement and orientation of connecting rods 7 and 8 are selected so the Instant Rotation Center *(IRC)* of the rigid structure remains, during the whole travel path of the damping device 6, ahead of the articulated joint 7b of the lower connecting rod 7 with the chassis 3.

This particular configuration allows the system 1 to achieve levels of pedaling efficiency over 100% during a great part of the travel path of the axle 30 and, at the same time, to achieve optimum levels of brake-squat. That is, with the system of the invention, it is possible to select several geometries that make it possible to adapt the system to the user needs regarding the brake-squat response, with the possibility of selecting geometries with values over 100% or values below 100%, while maintaining a high pedaling efficiency.

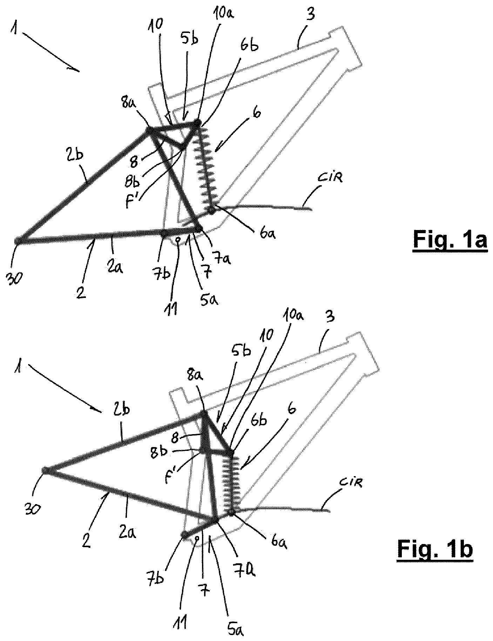

Embodiments one to eight, illustrated in figures 1 to 8, have in common that the arrangement and configuration of the upper and lower connecting rods 7 and 8 ensure that the connecting rods 7 and 8 rotate in opposite directions during the whole travel path of the axle 30 in the direction of compression of the damping device 6. Specifically, upper connecting rod 8 will rotate in the same direction as the wheels of the vehicle in the forward direction of the vehicle, i.e. clockwise according to the figures.

Advantageously, the *IRC* will follow a backwards path during the whole travel stroke of the axle 30 in the direction of compression of the damping device 6.

Figures 1a and 1b depict a first embodiment of system 1 in its empty position, i.e. without load, and in a maximum stroke position of the axle 30, respectively.

In this embodiment, the upper connecting rod 8 is part of the lever 10, which is a first-class lever. Consider the fact that end 6a of the damping device 6 opposite to the one connected to the lever 10 is articulated to a fixed point of the chassis 3, one level below the fulcrum (f') of the lever 10.

As illustrated in figures 1a and 1b, the *IRC* of the rigid structure 2 remains, during the whole working stroke of the damping device 6, ahead of the articulated joint 7b of the lower connecting rod 7 with the chassis 3.

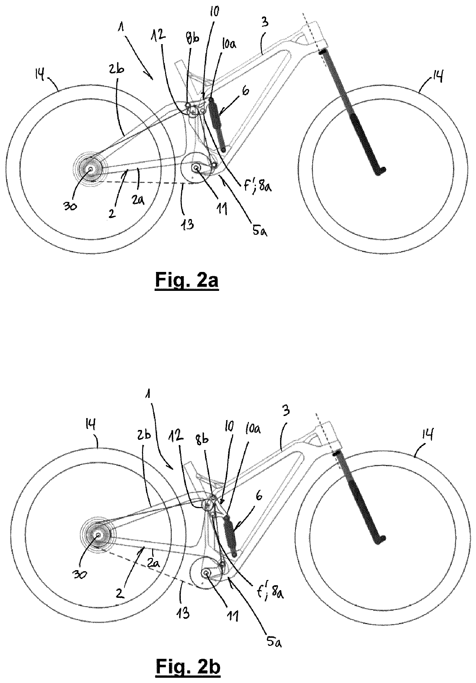

To further mitigate the pedal kickback effect, figures 2a and 2b depict a particularly interesting embodiment of the invention, where upper connecting rod 8 of system 1, according to figures 1a and 1b, is used as the support of a sprocket or pulley 12 which, working as a loose pulley, is intended to support and offset the chain 13 which drives the rear wheel 14. This sprocket 12 allows the tension or the tendency of chain 13 to elongate to be absorbed by the section of the chain arranged between the axle 30 (or otherwise in the gears rotating around the axle 30) and the sprocket 12, without transmitting it to the bottom bracket 11 of the bicycle.

One consequence of the foregoing is that a selection of geometries can be made giving axle 30 a not-so-vertical stroke, which can get farther away from the bottom bracket 11 without increasing the pedal kickback effect, thus improving the capacity of the vehicle to overcome irregularities.

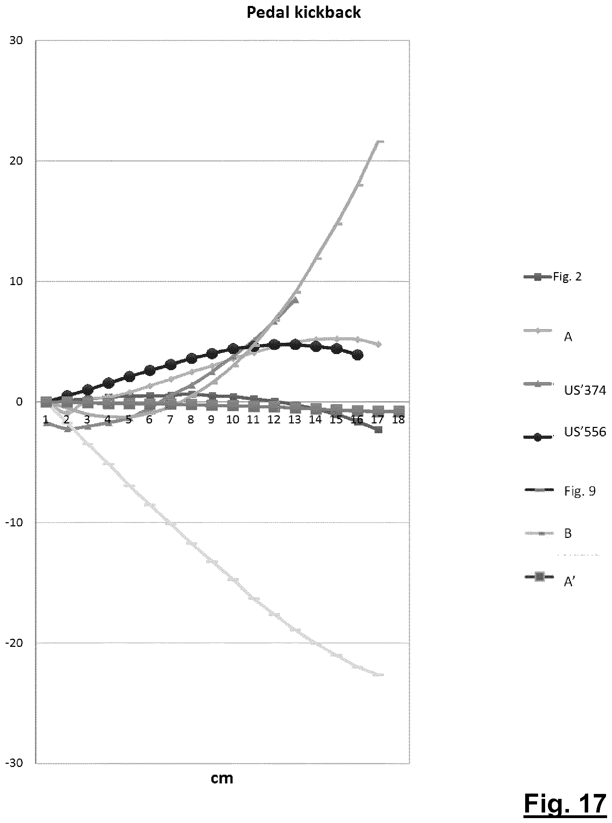

The graph in figure 17 depicts the behavior of this embodiment with regard to the pedal kickback, compared to the systems representing the state of the art presented and discussed in the background of the invention section.

It is of interest that the response is as flat as possible during most of the range of the axle 30 of the rear wheel. Values above 0 indicate that the cranks of the bottom bracket tend to go back and values below 0 indicate a lack of traction, as the transmission chain is left without tension.

The graph in figure 17 also indicates the response to pedal kickback of two embodiments of the invention based on that represented by figures 2a and 2b, but without the sprocket 12 used to offset the chain; and legend A' illustrates the response of an embodiment of the invention similar to that of figures 2a and 2b, where the articulated joints 7a and 7b of the lower connecting rod 7 with the rigid structure 2 and the chassis 3, respectively, of the vehicle are arranged at a level a little above that illustrated in figures 2a and 2b, giving the suspension system and specifically the axle 30 a greater ability to recoil.

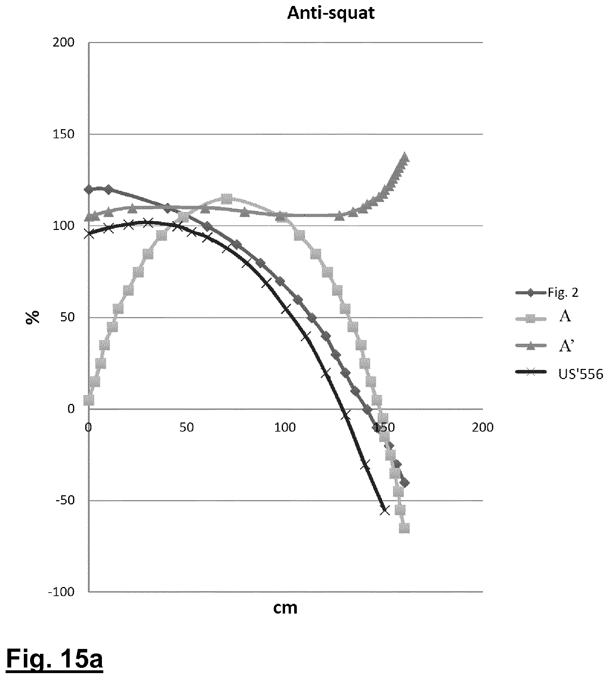

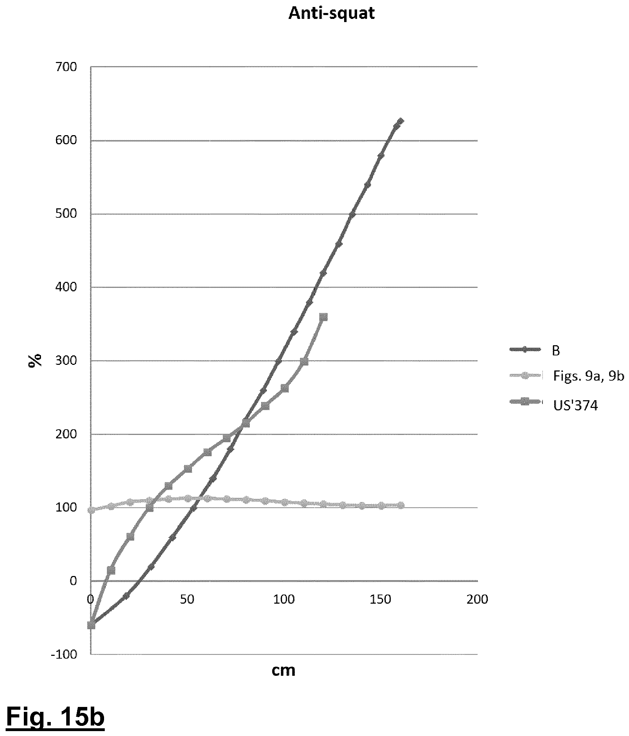

The graph in figure 15a depicts the pedaling efficiency or anti-squat response of the embodiments according to figures 2a and 2b, as well as those illustrated in figure 17 with legends A and A', discussed before, along with one of the systems representing the state of the art, while figure 15b shows the anti-squat response of the systems representing the state of the art.

Consider the fact that, according to the invention, it is possible to adjust the bicycle to higher sag levels, with over 100% pedaling efficiency.

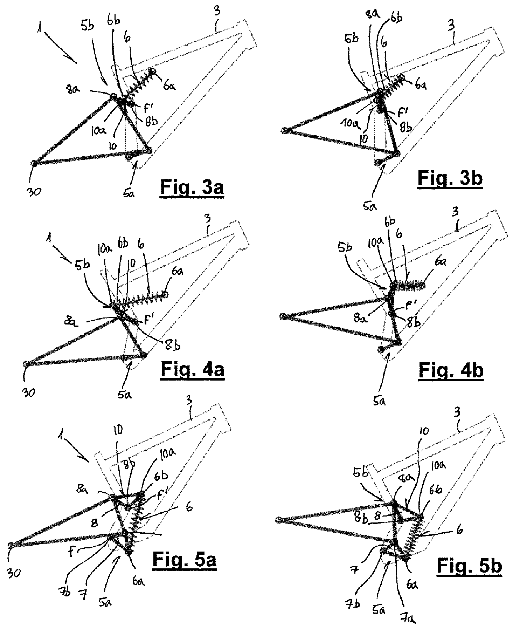

Figures 3 to 8 show other variants of the invention where the *IRC* will also follow a backwards path during the whole travel stroke of the axle 30 in the direction of compression of the damping device 6.

Out of these variants, those illustrated in figures 3a, 3b and 4a, 4b, include a damping device 6 with only one moveable end 6b, connected through the articulated joint 10a to the lever 10, a second-class lever in the example of figures 3a and 3b, and a third-class lever in the example of figures 4a and 4b.

In the variants of figures 5 to 6, both the upper and lower connecting rods 8 and 7 are part of the respective levers 10 and 9 rotating around the corresponding fulcrums f' and f matching the articulated joints 8b and 7b of these connecting rods 8 and 7 with the chassis 3 of the bicycle. In these cases, both ends 6b and 6a of the damping device 6 are moveable.

Using this arrangement of the damping device 6, it is possible for the ends 6b and 6a to change their position with regard to the geometric center of the damping device 6, while this device simultaneously moves by both ends 6b and 6a along the whole range of the suspension, where the range of the suspension is understood to mean the whole set of different positions that all the elements of the suspension system 1 of the invention can adopt, from the idle position without load on the bicycle, through the idle position with the biker on the bicycle (sag position), and overcoming bumps, to the maximum compression position of the damping device or maximum stroke.

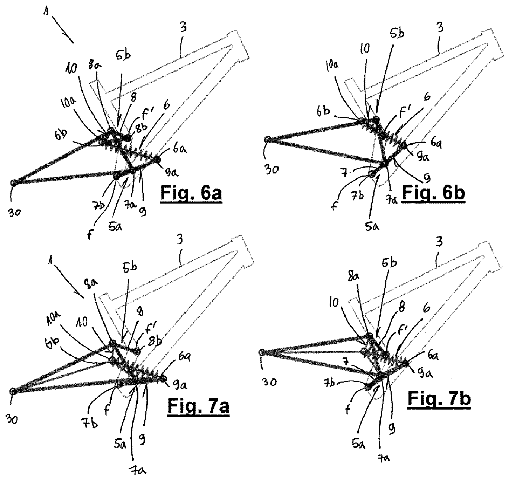

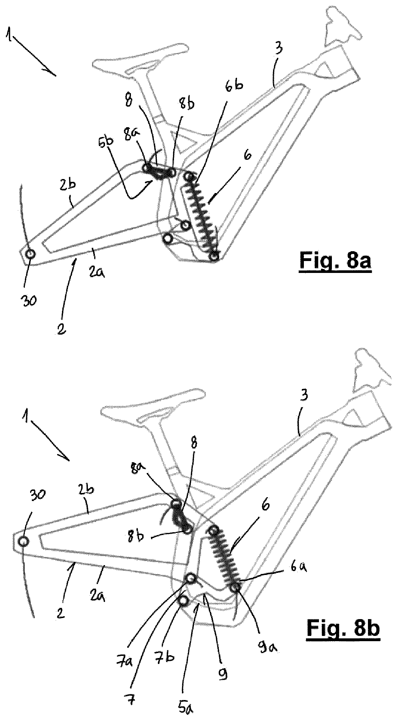

In the variants illustrated in figures 7a, 7b and 8a, 8b, the lower connecting rod 7 is part of the lever 9, rotating around fulcrum f, matching the articulated joint 7b of arm 2a of the rigid structure 2 with the chassis 3. The resistance of the lever 9 is implemented by the articulated joint 9a with end 6a of the damping device 6.

In these variants, unlike the previous variants, the opposite end 6b of the damping device 6 is articulated to the rigid structure 2, at a point behind the articulated joint 8b of its upper arm 2b with the chassis 3 in the example of figures 7a and 7b; and at a point ahead of the articulated joint 8b of its upper arm 2b with the chassis 3 in the example of figures 8a and 8b.

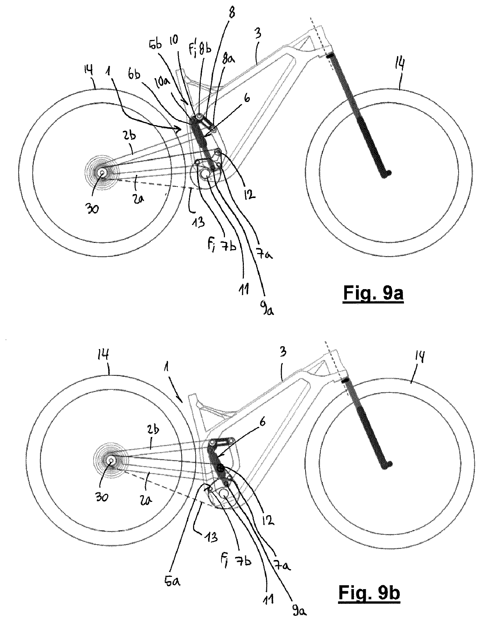

The embodiments nine to fourteen, illustrated in figures 9 to 14, have in common the arrangement and configuration of the upper and lower connecting rods 7 and 8, ensuring that these connecting rods rotate in the same direction, opposite to that of the wheels in the forward direction of the vehicle, during the whole travel path of the axle 30 in the direction of compression of the damping device 6. Specifically, upper connecting rod 8 and lower connecting rod 7 will rotate in counter-clockwise direction according to the figures.

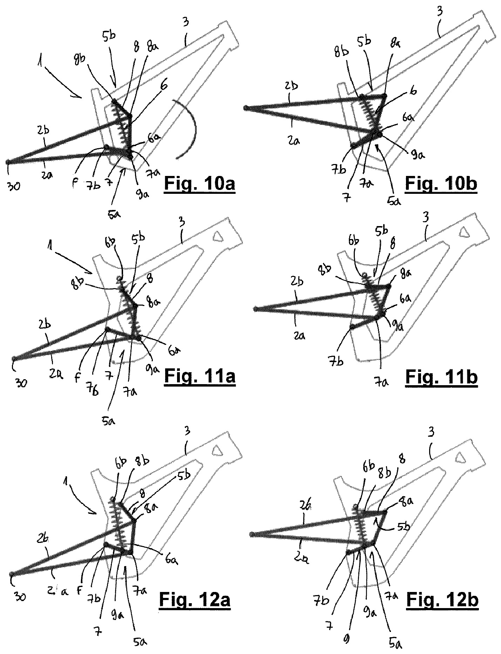

In this case, the *IRC* will follow an ascending stroke during the whole travel stroke of the axle 30 in the direction of compression of the damping device 6. This stroke is represented in figure 10a, which shows an embodiment discussed below.

These embodiments are optimal when the damping device 6 is a gas device, for example an air damper.

In the variant illustrated in figures 9a and 9b, lower connecting rod 7 and upper connecting rod 8 are part of the corresponding levers 9 and 10, respectively. In this case the system combines a second-class lower lever 9 rotating around fulcrum f, with a first-class upper lever 10 rotating around fulcrum f.

Fulcrums f and f' match articulated joints 7b and 8b, respectively, of arms 2a and 2b of the rigid structure with the chassis 3. Advantageously, the front ends of these lower and upper arms 2a and 2b are connected between each other to increase the rigidity of the rigid structure 2, although it is also possible for them not to be connected to each other. As with the variants illustrated in figures 5 to 8, both ends 6a and 6b of the damping device 6 are moveable.

It is evident that the invention takes into consideration that for all variants the front ends of these lower and upper arms 2a and 2b are connected to each other to increase the rigidity of the rigid structure 2, without affecting the dynamics of the suspension system 1.

Similar to the variant illustrated in figures 2a and 2b, to mitigate even more the pedal kickback effect, the lower connecting rod 7 of the system 1 is used as a support for a sprocket or pulley 12 which, acting as a loose pulley, is intended to support and offset the chain 13 driving the rear wheel 14. This sprocket 12 makes it possible for the tension or the tendency of chain 13 to elongate to be absorbed by the section of the chain arranged between the axle 30 (or otherwise in the gears rotating around the axle 30) and the sprocket 12, without transmitting it to the bottom bracket 11 of the bicycle.

One consequence of the foregoing is that a selection of geometries can be made giving axle 30 a not-so-vertical path, or a backwards one, which can get farther away from the bottom bracket 11 without increasing the pedal kickback effect, thus improving the capacity of the vehicle to overcome irregularities.

Figure 15b shows the anti-squat behavior and the pedal kickback for the embodiments displayed in figures 9a and 9b described before, as well as a variant of the suspension system identical to figures 9a and 9b, but without the sprocket, identified with legend B.

In the variants of figures 10 to 13, only the end 6a of the damping device 6 is moveable, connected by an articulated joint 9a to the lever 9, which is part of the lower connecting rod 7. In the variants shown in figures 10 to 13, only the end 6a of the damping device 6 is moveable, connected by the articulated joint 9a to lever 9, which is part of the lower connecting rod 7. In these cases, fulcrum f of the lever matches the articulated joint 7b of the lower connecting rod 7 with the lower arm 2a of the rigid structure 2.

In the variant of figures 10a, 10b and 11a, 11b, the lever 9 is a third-class lever. In the first case, the end 6b of the damping device matches the articulated joint 8b of the upper connecting rod 8 with the upper arm 2b of the rigid structure 2, while in the second case, the end 6b of the damping device 6 is located at a point above said articulated joint 8b. However, the invention takes into consideration other locations for the end 6b.

In the variant of figures 12a and 12b, the lever 9 is a second-class lever and the end 6b of the damping device remains articulated to the chassis 3 at a point located above said articulated joint 8b. However, the invention takes into consideration other locations for the end 6b.

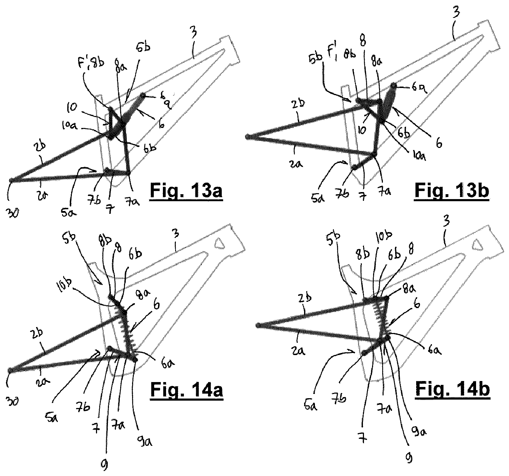

In the variant of figures 13a and 13b, the upper connecting rod 8 is part of a lever 10, in this case a third-class lever, rotating around fulcrum f' matching the articulated joint 8b between the chassis 3 and the upper arm 2b of the rigid structure 2. The end 6a opposite to the damping device is articulated to the chassis 3 at a point above said articulated joint 8b.

The variant of figures 14a and 14b combines two levers 9 and 10, lever 9 being a third-class lever and lever 10 being a second-class lever. According to this variant, both ends 6a and 6b of the damping device are moveable, connected by the corresponding articulated joints 9a and 10a to levers 9 and 10, respectively.

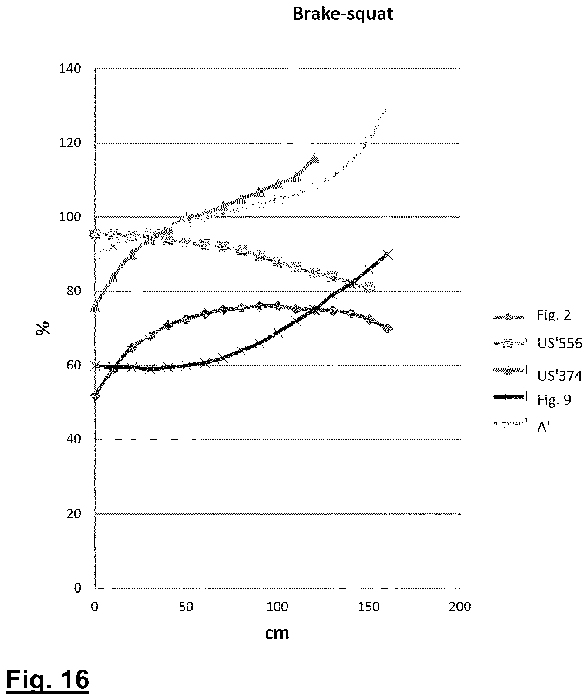

As an example, figure 16 illustrates the brake-squat behavior for some of the embodiments whose response to the pedal kickback is illustrated in figure 17.

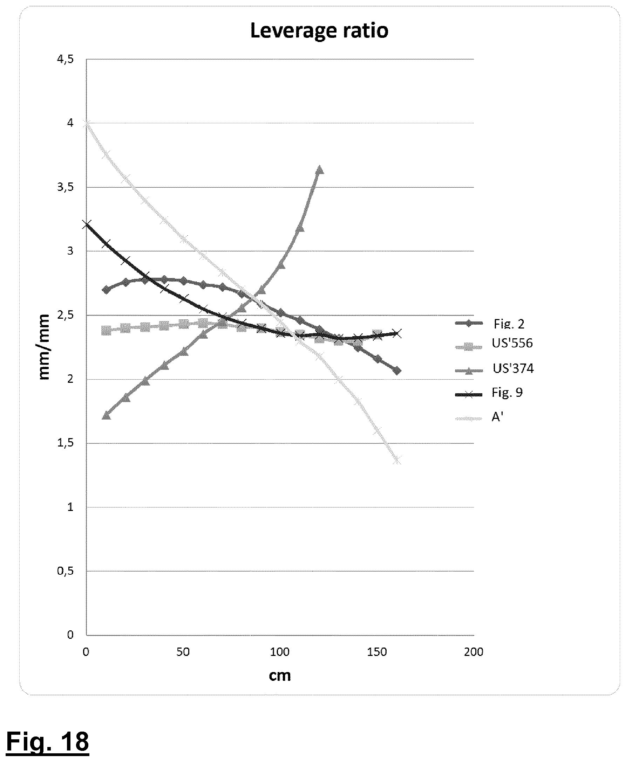

Figure 18 illustrates the leverage ratio for the same embodiments illustrated in figure 16. Leverage ratio in the context of this invention is the ratio between the range of the rigid structure 2 and the range of the damping device. Therefore, for example for a bicycle with a 150 mm range using a damper with a range of 50 mm, the LR would be 150/50=3.

The variation of the LR along the range defines the behavior of the suspension. Consider the fact that it is possible to have two systems with the same LR, for example a value of 2.5, but the first could have a constant LR and the second could have a variable LR: with an initial value of 3 and final value of 2, but with an average of 2.5. Then in both cases the average LR would be the same (2.5), but the behavior of the system would be completely different.

Based on the type of damping device included in the suspension system or the type of driving applied to the bicycle, it will be necessary to achieve a leverage ratio suited to them in order to achieve the desired operation of the suspension system.

## Claims

1. A suspension system (1) for vehicles (15) with at least two wheels comprising a rigid structure (2) supporting the axle (30) of a rear wheel of the vehicle and a damping device (6), the rigid structure comprising a lower arm (2a) and an upper arm (2b) angled and connected to corresponding upper and lower points of the chassis (3) of the vehicle through corresponding lower mechanism (5a) and upper mechanism (5b), respectively, that provide movement, in a guided way and under the influence of the damping device (6), of the rigid structure (2) with regard to the chassis (3), of which:
- the lower mechanism (5a) comprises a lower connecting rod (7) having articulated joints (7a, 7b) with the lower arm (2a) of the rigid structure and the chassis (3) that are at least 20 mm apart from one another, the articulated joint (7a) with said lower arm of the rigid structure being arranged, in the forward direction of the vehicle, ahead of or matching the vertical plane passing through the output axle (11) of the driving mechanism of the vehicle - the bottom bracket in the case of a bicycle -
- the upper mechanism (5b) comprising an upper connecting rod (8) having articulated joints (8a, 8b) with the upper arm (2b) of the rigid structure and chassis, the articulated joint (8b) with the chassis being arranged, in the forward direction of the vehicle, ahead of or matching the vertical plane passing through the articulated joint (7b) of the lower connecting rod (7) with the chassis,
- at least one of the upper or lower connecting rods (7; 8) forming part of a lever (9; 10) whose fulcrum (f; f') is the articulated joint of the connecting rod with the chassis and whose resistance is an articulated joint (9a or 10a) with one of the ends (6a or 6b) of the damping device (6), the suspension system being **characterized in that** the arrangement and orientation of the lower and upper connecting rods (7 or 8) is such that the Instant Rotation Center *(IRC)* of the rigid rigid structure (2) remains, during the whole work stroke of the damping device (6), ahead of the articulated joint (7b) of the lower connecting rod (7) with the chassis (3), and **in that** the lower connecting rod (7) is used as the support of a sprocket or pulley (12) that, acting as a loose pulley, is intended to support and offset a transmission chain or belt (13).

2. The system (1) according to claims 1, **characterized in that** during the whole travel stroke of the axle (30) the articulated joint (7a) of the lower connecting rod (7) of the lower mechanism (5a) is always ahead of or on the vertical plane passing through its articulated joint (7b) with the chassis (3).

3. The system (1) according to any one of the previous claims, **characterized in that** the articulated joint (7b) of the lower connecting rod (7) with the chassis (3) is at a distance shorter than or equal to 200 mm from the output axle (11) of the driving mechanism.

4. The system (1) according to any one of the previous claims, **characterized in that** both the upper and lower connecting rods (7, 8) rotate in opposite directions, with that of the upper connecting rod (8) being the same as that of the wheels (14) in the forward direction of the vehicle (15), during the whole travel stroke of the axle (30) in the direction of compression of the damping device (6).

5. The system (1) according to the previous claim, **characterized in that** the upper connecting rod (8) is part of said lever (10), and **in that** the lever (10) is a second- or third-class lever.

6. The system (1) according to the previous claim, **characterized in that** the end (6a) of the damping device (6) opposite to the one connected to the lever is articulated to a fixed point of the chassis (3), at a level above the fulcrum (f') of the lever.

7. The system (1) according to claim 4, **characterized in that** the upper lever (8) is part of a first-class lever (10); and the lower connecting rod (7) is part of another third-class lever (9), whose fulcrums (f, f) are the articulated joint of said upper and lower connecting rods (8, 7) with the chassis (3) and whose resistances are corresponding articulated joints with the ends (6b, 6a) of the damping device (6).

8. The system (1) according to claim 4, **characterized in that** the upper connecting rod (8) is part of a third-class lever (10); and the lower connecting rod (7) is part of another, also of third-class, lever (9), whose fulcrums (f', f) are the articulated joint of said upper and lower connecting rods (8, 7) with the chassis (3) and whose resistances are corresponding articulated joints with the ends (6b, 6a) of the damping device (6).

9. The system according to claim 4, **characterized in that** the upper connecting rod (8) is part of said lever (10), **in that** the lever is a first-class lever and **in that** the end (6a) of the damping device (6) opposite to the one connected to the lever (10) is articulated to a fixed point of the chassis (3), at a level below the fulcrum (f') of the lever.

10. The system according to claim 4, **characterized in that** the lower connecting rod (7) is part of said lever (9), **in that** the lever is a third-class lever and the end (6a) of the damping device (6) opposite to the one connected to the lever (9) is articulated to a fixed point of the rigid structure (2).

11. The system (1) according to any one of the claims 4 to 10, **characterized in that** the *IRC* follows a backwards path during the whole travel stroke of the axle (30) in the direction of compression of the damping device (6).

12. The system according any one of the claims 1 to 3, **characterized in that** both the upper and lower connecting rods (7, 8) rotate in the same direction, opposite to that of the wheels (14), in the forward direction of the vehicle (15), during the whole travel stroke of the axle (30) in the direction of compression of the damping device (6) and **in that in that** the *IRC* follows an ascending stroke during the whole travel stroke of the axle (30) in the direction of compression of the damping device (6).

13. The system (1) according to claim 12, **characterized in that** the lower connecting rod (7) is part of said lever (9), **in that** the lever (9) is a third-class lever, and **in that** the end (6b) of the damping device (6) opposite to the one connected to the lever is articulated to the upper mechanism (5b), at a point of the corresponding upper connecting rod (8) or matching the articulated joint (8b) of said upper connecting rod (8) with the chassis (3).

14. The system (1) according to claim 12, **characterized in that** the lower connecting rod (7) is part of said lever (9), and **in that** the articulated joint (9a) with the end (6b) of the damping device (6) is arranged on the line connecting the fulcrum (f) to the articulated joint (7a) with the rigid structure (2), the lever (9) being a second or third-class lever, the end (6b) of the damping device (6) being opposite to the one connected to the lever articulated to a fixed point of the chassis (3).

15. The system (1) according to claim 12, **characterized in that** the upper connecting rod (8) is part of said lever (10), which is a third-class lever, and **in that** the end (6a) of the damping device (6) opposite to the one connected to the lever is articulated to a fixed point of the chassis (3), at a level above the fulcrum (f') of the lever (10).

## Patentansprüche

1. Aufhängungssystem (1) für Fahrzeuge (15) mit mindestens zwei Rädern umfassend eine starre Struktur (2), welche die Achse (30) eines Hinterrades des Fahrzeugs und eine Dämpfungsvorrichtung (6) stützt, wobei die starre Struktur einen unteren Arm (2a) und einen oberen Arm (2b) umfasst, abgewinkelt und mit entsprechenden oberen und unteren Punkten des Fahrgestells (3) des Fahrzeugs jeweils über den entsprechenden unteren Mechanismus (5a) und den entsprechenden oberen Mechanismus (5b), verbunden, welche eine Bewegung, geführt und unter dem Einfluss der Dämpfungsvorrichtung (6), der starren Struktur (2) in Bezug auf das Fahrgestell (3) bereitstellen, von denen:
- der untere Mechanismus (5a) eine untere Verbindungsstange (7) umfasst, welche Knickgelenke (7a, 7b) mit dem unteren Arm (2a) der starren Struktur und dem Fahrgestell (3) aufweist, welche mindestens 20 mm voneinander beabstandet sind, wobei das Knickgelenk (7a) mit dem genannten unteren Arm der starren Struktur, in der Vorwärtsrichtung des Fahrzeugs, vor oder mit der vertikalen Ebene übereinstimmend, welche durch die Abtriebsachse (11) des Antriebsmechanismus des Fahrzeugs - das Tretlager im Falle eines Fahrrades -, durchgeht, angeordnet ist,
- der obere Mechanismus (5b) eine obere Verbindungsstange (8) umfasst, welche Knickgelenke (8a, 8b) mit dem oberen Arm (2b) der starren Struktur und dem Fahrgestell aufweist, wobei das Knickgelenk (8b) mit dem Fahrgestell, in der Vorwärtsrichtung des Fahrzeugs, vor oder mit der vertikalen Ebene übereinstimmend, welche durch das Knickgelenk (7b) der unteren Verbindungsstange (7) mit dem Fahrgestell durchgeht, angeordnet ist,
- mindestens eine der oberen oder der unteren Verbindungsstange (7; 8) Bestandteil eines Hebels (9; 10) ist, dessen Hebelpunkt (f; f') das Knickgelenk der Verbindungsstange mit dem Fahrgestell ist und dessen Widerstand ein Knickgelenk (9a oder 10a) mit einem der Enden (6a oder 6b) der Dämpfungsvorrichtung (6) ist, wobei das Aufhängungssystem **dadurch gekennzeichnet ist, dass** die Anordnung und Ausrichtung der unteren und der oberen Verbindungsstangen (7 oder 8) derart ist, dass das momentane Rotationszentrum *(IRC)* der starren Struktur (2) erhalten bleibt, während des gesamten Arbeitshubes der Dämpfungsvorrichtung (6), vor dem Knickgelenk (7b) der unteren Verbindungsstange (7) mit dem Fahrgestell (3), und dass die untere Verbindungsstange (7) als Stütze eines Ritzels oder einer Scheibe (12) verwendet wird, welche, wie eine Losscheibe wirkend, dazu vorgesehen ist, eine Übertragungskette oder einen Übertragungsriemen (13) zu stützen und zu versetzen.

2. System (1) nach Anspruch 1, **dadurch gekennzeichnet, dass** während des gesamten Verfahrhubes der Achse (30) das Knickgelenk (7a) der unteren Verbindungsstange (7) des unteren Mechanismus (5a) immer vor oder auf der vertikalen Ebene, welche durch deren Knickgelenk (7b) mit dem Fahrgestell (3) durchgeht, ist.

3. System (1) nach einem der vorhergehenden Ansprüche, **dadurch gekennzeichnet, dass** das Knickgelenk (7b) der unteren Verbindungsstange (7) mit dem Fahrgestell (3) in einem Abstand kürzer oder gleich als 200 mm von der Abtriebsachse (11) des Antriebsmechanismus ist.

4. System (1) nach einem der vorhergehenden Ansprüche, **dadurch gekennzeichnet, dass** sowohl die obere als auch die untere Verbindungsstangen (7, 8) in entgegengesetzten Richtungen rotieren, wobei diejenige der oberen Verbindungsstange (8) die gleiche derjenigen der Räder (14) in der Vorwärtsrichtung des Fahrzeugs (15) ist, während des gesamten Verfahrhubes der Achse (30) in der Kompressionsrichtung der Dämpfungsvorrichtung (6).

5. System (1) nach dem vorhergehenden Anspruch, **dadurch gekennzeichnet, dass** die obere Verbindungsstange (8) Bestandteil des genannten Hebels (10) ist, und dass der Hebel (10) ein Hebel zweiten oder dritten Grades ist.

6. System (1) nach dem vorhergehenden Anspruch, **dadurch gekennzeichnet, dass** das Ende (6a) der Dämpfungsvorrichtung (6), welches demjenigen entgegengesetzt ist, welches mit dem Hebel verbunden ist, in einem Festpunkt des Fahrgestells (3), bei einem Niveau über dem Hebelpunkt (f') des Hebels, angelenkt ist.

7. System (1) nach Anspruch 4, **dadurch gekennzeichnet, dass** der obere Hebel (8) Bestandteil eines Hebels ersten Grades (10) ist; und die untere Verbindungsstange (7) Bestandteil eines anderen Hebels dritten Grades (9) ist, dessen Hebelpunkte (f', f) das Knickgelenk der genannten oberen und unteren Verbindungsstangen (8, 7) mit dem Fahrgestell (3) sind und dessen Widerstände entsprechende Knickgelenke mit den Enden (6b, 6a) der Dämpfungsvorrichtung (6) sind.

8. System (1) nach Anspruch 4, **dadurch gekennzeichnet, dass** die obere Verbindungsstange (8) Bestandteil eines Hebels dritten Grades (10) ist; und die untere Verbindungsstange (7) Bestandteile eines anderen Hebels, das heißt dritten Grades, (9) ist, dessen Hebelpunkte (f', f) das Knickgelenk der genannten oberen und unteren Verbindungsstangen (8, 7) mit dem Fahrgestell (3) sind und dessen Widerstände entsprechende Knickgelenke mit den Enden (6b, 6a) der Dämpfungsvorrichtung (6) sind.

9. System nach Anspruch 4, **dadurch gekennzeichnet, dass** die obere Verbindungsstange (8) Bestandteil des genannten Hebels (10) ist, dass der Hebel ein Hebel ersten Grades ist und dass das Ende (6a) der Dämpfungsvorrichtung (6), welches demjenigen entgegengesetzt ist, welches mit dem Hebel (10) verbunden ist, in einem Festpunkt des Fahrgestells (3), bei einem Niveau unter dem Hebelpunkt (f') des Hebels, angelenkt ist.

10. System nach Anspruch 4, **dadurch gekennzeichnet, dass** die untere Verbindungsstange (7) Bestandteil des genannten Hebels (9) ist, dass der Hebel ein Hebel dritten Grades ist und das Ende (6a) der Dämpfungsvorrichtung (6), welches demjenigen entgegengesetzt ist, welches mit dem Hebel (9) verbunden ist, in einem Festpunkt der starren Struktur (2) angelenkt ist.

11. System (1) nach einem der Ansprüche 4 bis 10, **dadurch gekennzeichnet, dass** das *IRC* einen Rückwärtsweg während des gesamten Verfahrhubes der Achse (30) in der Kompressionsrichtung der Dämpfungsvorrichtung (6) folgt.

12. System nach einem der Ansprüche 1 bis 3, **dadurch gekennzeichnet, dass** sowohl die obere als auch die untere Verbindungsstangen (7, 8) in der gleichen Richtung rotieren, derjenigen der Räder (14) entgegengesetzt, in der Vorwärtsrichtung des Fahrzeugs (15), während des gesamten Verfahrhubes der Achse (30) in der Kompressionsrichtung der Dämpfungsvorrichtung (6), und dass das *IRC* einen Aufwärtshub während des gesamten Verfahrhubes der Achse (30) in der Kompressionsrichtung der Dämpfungsvorrichtung (6) folgt.

13. System (1) nach Anspruch 12, **dadurch gekennzeichnet, dass** die untere Verbindungsstange (7) Bestandteil des genannten Hebels (9) ist, dass der Hebel (9) ein Hebel dritten Grades ist, und dass das Ende (6b) der Dämpfungsvorrichtung (6), welches demjenigen entgegengesetzt ist, welches mit dem Hebel verbunden ist, im oberen Mechanismus (5b), in einem Punkt der entsprechenden oberen Verbindungsstange (8) oder mit dem Knickgelenk (8b) der genannten oberen Verbindungsstange (8) mit dem Fahrgestell (3) übereinstimmend, angelenkt ist.

14. System (1) nach Anspruch 12, **dadurch gekennzeichnet, dass** die untere Verbindungsstange (7) Bestandteil des genannten Hebels (9) ist, und dass das Knickgelenk (9a) mit dem Ende (6b) der Dämpfungsvorrichtung (6) auf der Linie angeordnet ist, welche den Hebelpunkt (f) mit dem Knickgelenk (7a) mit der starren Struktur (2) verbindet, wobei der Hebel (9) ein Hebel zweiten oder dritten Grades ist, wobei das Ende (6b) der Dämpfungsvorrichtung (6) demjenigen, welches mit dem Hebel verbunden ist, welcher in einem Festpunkt des Fahrgestells (3) angelenkt ist, entgegengesetzt ist.

15. System (1) nach Anspruch 12, **dadurch gekennzeichnet, dass** die obere Verbindungsstange (8) Bestandteil des genannten Hebels (10) ist, welcher ein Hebel dritten Grades ist, und dass das Ende (6a) der Dämpfungsvorrichtung (6), welches demjenigen entgegengesetzt ist, welches mit dem Hebel verbunden ist, in einem Festpunkt des Fahrgestells (3), bei einem Niveau über dem Hebelpunkt (f') des Hebels (10), angelenkt ist.

## Revendications

1. Système de suspension (1) pour véhicules (15) avec au moins deux roues comprenant une structure rigide (2) supportant l'essieu (30) de la roue arrière du véhicule et un dispositif de d'amortissement (6), la structure rigide comprenant un bras inférieur (2a) et un bras supérieur (2b) aménagés et connectés aux points supérieur et inférieur correspondants du châssis (3) du véhicule à travers un mécanisme inférieur (5a) et un mécanisme supérieur (5b) correspondants, respectivement, qui fournissent du mouvement, d'une manière guidée et sous l'influence du dispositif d'amortissement (6), de la structure rigide (2) par rapport au châssis (3), duquel :
- le mécanisme inférieur (5a) comprend une tige de connexion inférieure (7) ayant des articulations (7a, 7b) avec le bras inférieur (2a) de la structure rigide et le châssis (3) qui sont au moins séparés 20 mm l'un de l'autre, l'articulation (7a) avec ledit bras inférieur de la structure rigide étant aménagée, dans la direction avant du véhicule, devant ou en correspondance avec le plan vertical passant à travers l'essieu de sortie (11) du mécanisme d'entraînement du véhicule - l'axe de pédalier dans le cas d'une bicyclette -
- le mécanisme supérieur (5b) comprend une tige de connexion supérieure (8) ayant des articulations (8a, 8b) avec le bras supérieur (2b) de la structure rigide et le châssis, l'articulation (8b) avec le châssis étant aménagée, dans la direction avant du véhicule, devant ou en correspondance avec le plan vertical passant à travers l'articulation (7b) de la tige de connexion inférieure (7) avec le châssis,
- au moins une des tiges de connexion supérieure ou inférieure (7 ; 8) faisant partie d'un levier (9 ; 10) dont le point d'appui (f ; f') est l'articulation de la tige de connexion avec le châssis et dont la résistance est une articulation (9a ou 10a) avec une des extrémités (6a ou 6b) du dispositif d'amortissement (6), le système de suspension étant **caractérisé en ce que** l'aménagement et l'orientation des tiges de connexion inférieure et supérieure (7 ou 8) est telle que le Centre de Rotation Instantané *(IRC)* de la structure rigide (2) demeure, pendant toute la course de travail du dispositif d'amortissement (6), devant l'articulation (7b) de la tige de connexion inférieure (7) avec le châssis (3) ; et **en ce que** la tige de connexion inférieure (7) est utilisée corne support d'un pignon ou poulie (12) qui, agissant comme une poulie folle, est destinée à supporter et décaler une chaîne ou courroie de transmission (13).

2. Système(1) selon la revendication 1, **caractérisé en ce que** pendant toute la course de déplacement de l'essieu (30) l'articulation (7a) de la tige de connexion inférieure (7) du mécanisme inférieur (5a) est toujours devant ou sur le plan vertical passant à travers son articulation (7b) avec le châssis (3).

3. Système (1) selon l'une quelconque des revendications précédentes, **caractérisé en ce que** l'articulation (7b) de la tige de connexion inférieure (7) avec le châssis (3) est à une distance inférieure à ou égale à 200 mm de l'essieu de sortie (11) du mécanisme d'entraînement.

4. Système (1) selon l'une quelconque des revendications précédentes, **caractérisé en ce qu'**aussi bien la tige de connexion supérieure que l'inférieure (7, 8) tournent dans des sens opposés, et celui de la tige de connexion supérieure (8) étant le même que celui des roues (14) dans la direction avant du véhicule (15), pendant toute la course de déplacement de l'essieu (30) dans le sens de compression du dispositif d'amortissement (6).

5. Système (1) selon la revendication précédente, **caractérisé en ce que** la tige de connexion supérieure (8) est séparée dudit levier (10), et **en ce que** le levier (10) est un levier de deuxième ou troisième classe.

6. Système (1) selon la revendication précédente, **caractérisé en ce que** l'extrémité (6a) du dispositif d'amortissement (6) opposée à celle connectée au levier est articulée à un point fixe du châssis (3) à un niveau par-dessus le point d'appui (f') du levier.

7. Système (1) selon la revendication 4, **caractérisé en ce que** le levier supérieur (8) fait partie d'un levier de première classe (10); et la tige de connexion inférieure (7) fait parte d'un autre levier de troisième classe (9), dont les points d'appui (f', f) sont l'articulation desdites tiges de connexion supérieure et inférieure (8, 7) avec le châssis (3) et dont les résistances sont des articulations correspondantes avec les extrémités (6b, 6a) du dispositif d'amortissement (6).

8. Système (1) selon la revendication 4, **caractérisé en ce que** la tige de connexion supérieure (8) fait partie d'un levier de troisième classe (10) ; et la tige de connexion inférieure (7) fait partie d'un autre levier, également de troisième classe (9), dont les points d'appui (f', f) sont l'articulation desdites tiges de connexion supérieure et inférieure (8, 7) avec le châssis (3) et dont les résistances sont les articulations correspondantes avec les extrémités (6b, 6a) du dispositif d'amortissement (6).

9. Système selon la revendication 4, **caractérisé en ce que** la tige de connexion (8) fait partie dudit levier (10), **en ce que** le levier est un levier de première classe et **en ce que** l'extrémité (6a) du dispositif d'amortissement (6) opposée à celle connectée au levier (10) est articulée à un point fixe du châssis (3), à un niveau en dessous du point d'appui (f') du levier.

10. Système selon la revendication 4, **caractérisé en ce que** la tige de connexion inférieure (7) fait partie dudit levier (9), **en ce que** le levier est un levier de troisième classe et l'extrémité (6a) du dispositif d'amortissement (6) opposée à celle connectée au levier (9) est articulée à un point fixe de la structure rigide (2).

11. Système (1) selon l'une quelconque des revendications 4 à 10, **caractérisé en ce que** l'*IRC* suit un chemin en arrière pendant toute la course de déplacement de l'essieu (30) dans le sens de compression du dispositif d'amortissement (6).

12. Système selon l'une quelconque des revendications 1 à 3, **caractérisé en ce qu'**aussi bien les tiges de connexion supérieure qu'inférieure (7, 8) tournent dans le même sens, opposé à celui des roues (14), dans la direction avant du véhicule (15) pendant toute la course de déplacement de l'essieu (30) dans le sens de compression du dispositif d'amortissement (6) et **en ce que** l'*IRC* suit une course ascendante pendant toute la course de déplacement de l'essieu (30) dans le sens de compression du dispositif d'amortissement (6).

13. Système (1) selon la revendication 12, **caractérisé en ce que** la tige de connexion inférieure (7) fait partie dudit levier (9), **en ce que** le levier (9) est un levier de troisième classe, et **en ce que** l'extrémité (6b) du dispositif d'amortissement (6) opposée à celle connectée au levier est articulée au mécanisme supérieur (5b), à un point de la tige de connexion supérieure correspondante (8) ou en correspondance avec l'articulation (8b) de ladite tige de connexion supérieure (8) avec le châssis (3).

14. Système (1) selon la revendication 12, **caractérisé en ce que** la tige de connexion inférieure (7) fait partie dudit levier (9), et **en ce que** l'articulation (9a) avec l'extrémité (6b) du dispositif d'amortissement (6) est aménagée sur la ligne connectant le point d'appui (f) à l'articulation (7a) avec la structure rigide (2), le levier (9) étant un levier de deuxième ou troisième classe, l'extrémité (6b) du dispositif d'amortissement (6) étant opposée à celle connectée au levier articulé à un point fixe du châssis (3).

15. Système (1) selon la revendication 12, **caractérisé en ce que** la tige de connexion supérieure (8) fait partie dudit levier (10), qui est un levier de troisième classe, et **en ce que** l'extrémité (6a) du dispositif d'amortissement (6) opposée à celle connectée au levier est articulée à un point fixe du châssis (3), à un niveau par-dessus le point d'appui (f') du levier (10).
